# FASCICULE DE BREVET EUROPEEN

(11) **EP 0 849 025 B1**
(45) Date de publication et mention de la délivrance du brevet: **05.09.2001**
(21) Numéro de dépôt: 97402998.5
(22) Date de dépôt: 11.12.1997
(51) Int. Cl.: B23K 9/167

(54) **Procédé et torche de soudage à l'arc électrique sous gaz inerte**
Lichtbogenschweissverfahren und -Brenner mit Inertgas
Arc welding method and nozzle using an inert gas

(30) Priorité: 19.12.1996 FR 9615630
(43) Date de publication de la demande: 24.06.1998
(73) Titulaire: SNECMA MOTEURS, 75015 Paris (FR)
(72) Inventeur: Bernuchon, Roland Louis Georges, 94120 Fontenay Sous Bois (FR); Ledauphin, Etienne, 91100 Villabe (FR)

(56) Documents cités:
- EP-A- 0 677 353
- SUGITANI ET AL.: "Automatic simultaneous control of bead height and back bead shape using an arc sensor in one-sided welding with a backing plate." WELDING INTERNATIONAL, vol. 9, no. 5, 1995, ABINGTON, CAMBRIDGE, GB, pages 366-374, XP000506305

## Description

L'invention concerne un procédé et une torche de soudage à l'arc électrique sous gaz inerte. Elle s'applique dans la plupart des domaines industriels tels que le spatial, l'aéronautique et le nucléaire et peut être mise en application au sein d'un système de soudage automatique.

Dans les procédés de soudage TIG, un arc électrique est créé entre une électrode réfractaire fixe et deux pièces métalliques à souder. La formation d'un bain de fusion est alors obtenue par transfert de l'énergie de l'arc dans la matière des pièces métalliques. La protection de l'arc et du bain de fusion est réalisée par une atmosphère inerte. Le soudage des pièces métalliques est effectué soit par déplacement des pièces face à l'arc immobile, soit par avance de l'arc électrique sur les pièces, les pièces restant fixes. Cependant sous l'effet de l'avance relative de l'arc par rapport aux pièces, le bain de fusion présente une dispersion de températures qui peut provoquer des défauts de soudure. Ces défauts peuvent être des soufflures constituées par des gaz piégés dans la soudure, ou un mauvais état de surface des cordons de soudure. Les soufflures sont particulièrement pénalisantes pour la tenue mécanique des soudures car elles créent des porosités qui les fragilisent. Ces défauts de soudure sont d'autant plus importants, dans le cas d'un soudage de deux pièces réalisées en des matériaux différents, et dans le cas de pièces de fortes épaisseurs. L'invention a pour but de résoudre ces problèmes, d'améliorer les qualités des soudures, d'éliminer les soufflures, de faciliter le soudage des pièces de fortes épaisseurs ou de pièces réalisées en des matériaux différents.

Pour cela l'invention consiste,pendant l'opération de soudage TIG, à entrainer l'électrode réfractaire en rotation sur elle-même. Cette rotation est maintenue en permanence pendant le soudage de manière à permettre à l'arc électrique crée à l'extrémité de l'électrode de tourner sur lui-même et de brasser localement et continuellement la surface du bain de fusion.

Le bain de fusion ainsi brassé par l'arc tournant sur lui-même présente alors une température homogène au niveau du point de soudure ce qui permet l'amélioration de la qualité de la soudure et de son état de surface. Le brassage du bain de fusion permet également d'évacuer les gaz et d'éliminer les soufflures.

Selon l'invention le procédé de soudage à l'arc électrique sous gaz inerte consistant à créer un arc électrique entre une électrode réfractaire montée dans un corps de torche et deux pièces métalliques à souder, et à déplacer relativement l'arc électrique par rapport aux pièces à souder est caractérisé en ce qu'il consiste en outre, pendant l'opération de soudage, à entrainer continuellement l'électrode réfractaire en rotation sur elle-même, le corps de torche restant fixe axialement.

L'invention concerne aussi une torche de soudage à l'arc électrique sous gaz inerte comportant un corps de torche d'axe longitudinal XX' et une électrode réfractaire montée, dans le corps de torche suivant l'axe longitudinal XX', l'électrode étant apte à créer un arc électrique entre deux pièces métalliques à souder, caractérisée en ce qu'elle comporte en outre un arbre d'entrainement en rotation axiale de l'électrode monté longitudinalement dans le corps de torche par l'intermédiaire de roulements, l'arbre d'entrainement en rotation axiale étant solidaire de l'électrode, le corps de torche restant fixe axialement.

D'autres particularités et avantages de l'invention apparaitront clairement dans la suite de la description donnée à titre d'exemple non limitatif et faite en regard des figures annexées qui représentent ;

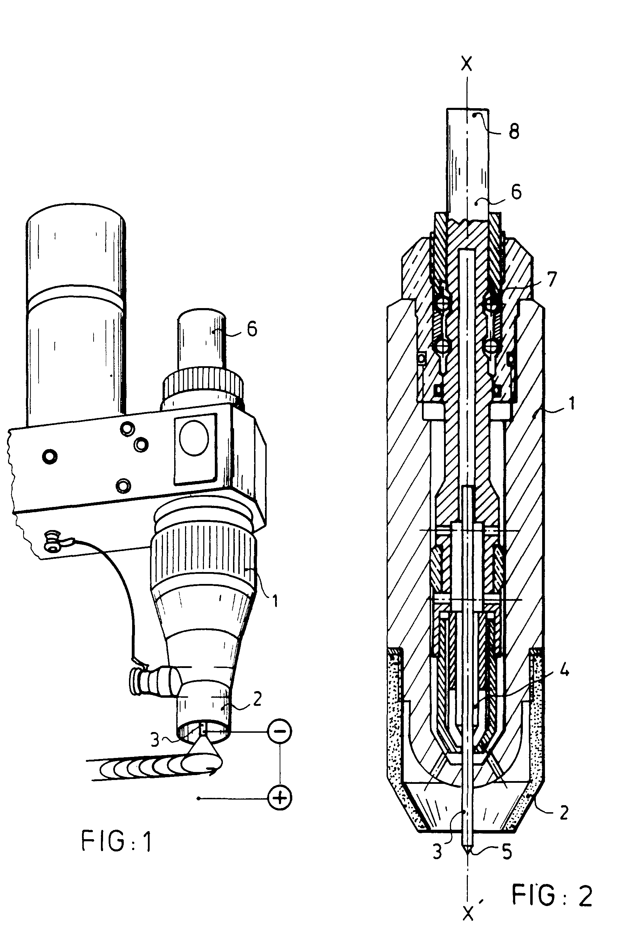

- la figure 1, un exemple de configuration de la torche de soudage, selon l'invention ;
- la figure 2, une vue en coupe longitudinale de la structure interne de la torche de soudage, selon l'invention.

La torche de soudage adaptée au soudage sous gaz inerte avec une électrode de tungstène (appelé soudage TIG) comporte un corps de torche cylindrique 1, prolongé en une extrémité proche du plan de soudage, par une buse 2 d'éjection d'un gaz inerte. Une électrode réfractaire 3 apte à former un cordon de soudure est montée dans le corps de torche suivant l'axe longitudinal XX' de la torche et est maintenu en position au moyen d'une pince de serrage 4. L'électrode 3 se termine par une pointe 5 permettant de créer un arc électrique qui est à l'origine d'un bain de fusion s'établissant entre deux pièces à souder.

L'électrode est solidaire d'un arbre 6 d'entrainement en rotation axiale monté longitudinalement dans le corps de torche par l'intermédiaire de roulements 7. L'arbre 6 comporte une extrémité 8 débouchant à l'extérieur du corps de torche, cette extrémité 8 étant destinée à être raccordée à des moyens d'actionnement en rotation, non représentés. Lors du déclenchement d'une opération de soudage, l'arbre 6 est actionné en rotation sur lui-même et entraine l'électrode en rotation sur elle-même ; seule l'électrode est mise en mouvement de rotation axial, le corps de torche restant fixe axialement.

La rotation de l'électrode est alors maintenue en permanence jusqu'à la fin de l'opération de soudage. L'arc électrique créé en permanence à l'extrémité de l'électrode en rotation sur elle-même est un arc tournant sur lui-même qui vient brasser localement et continuellement la surface du bain de fusion obtenu.
La surface du bain de fusion se trouve alors dans un état de vibration qui favorise la capillarité du bain, améliore l'homogénéité de la zone fondue et accélère le dégazage du bain. L'état de surface des cordons de soudure obtenus est régulier et les raccordements de la zone fondue au métal des pièces soudées sont progressifs.

Dans le cadre des revendications, l'invention n'est pas limitée à l'exemple de réalisation précisément décrit.

## Revendications

1. Procédé de soudage à l'arc électrique sous gaz inerte consistant à créer un arc électrique entre une électrode réfractaire montée dans un corps de torche et deux pièces métalliques à souder, et à déplacer relativement l'arc électrique par rapport aux pièces à souder, **caractérisé en ce qu**'il consiste, pendant l'opération de soudage, à entrainer continuellement l'électrode réfractaire en rotation sur elle-même, le corps de torche restant fixe axialement.

2. Torche de soudage à l'arc électrique sous gaz inerte comportant un corps de torche (1) d'axe longitudinal XX' et une électrode réfractaire (3) montée dans le corps de torche (1) suivant l'axe longitudinal XX', l'électrode (3) étant apte à créer un arc électrique entre deux pièces mécaniques à souder, **caractérisée en ce qu**'elle comporte un arbre (6) d'entrainement en rotation axiale de l'électrode (3) monté longitudinalement dans le corps de torche (1) par l'intermédiaire de roulements (7), l'arbre (6) d'entrainement en rotation axiale étant solidaire de l'électrode (3), le corps de torche restant fixe axialement.

3. Torche de soudage selon la revendication 2, **caractérisée en ce que** l'arbre (6) d'entrainement en rotation axiale de l'électrode (3) comporte une extrémité (8) débouchant à l'extérieur du corps de torche (1), cette extrémité (8) étant destinée à être raccordée à des moyens d'actionnement en rotation axiale.

## Claims

1. A process for inert gas electric arc welding consisting of creating an electric arc between a refractory electrode disposed in a torch body and two metal objects to be welded, and of moving the arc relative to said objects, **characterised in that** it consists of continuously rotating the refractory electrode on itself during the welding operation, the torch body remaining axially stationary.

2. An inert gas electric arc welding torch comprising a torch body (1) of longitudinal axis XX' and a refractory electrode (3) disposed in the torch body (1) on the longitudinal axis XX', the electrode (3) being adapted to produce an electric arc between two mechanical objects to be welded, **characterised in that** it comprises a shaft (6) for axially rotating the electrode (3) disposed longitudinally in the body (1) by way of rolling bearings (7), the shaft (6) being rigidly connected to the electrode (3), the torch body remaining axially stationary.

3. A welding torch according to claim 2, **characterised in that** the shaft (6) for axially rotating the electrode (3) comprises an end (8) extending out of the torch body (1) and being adapted for connection to means for producing axial rotation.

## Patentansprüche

1. Lichtbogenschweißverfahren mit Inertgas, das darin besteht, dass zwischen einer hitzebeständigen Elektrode, die in einem Brennerkörper sitzt, und zwei metallenen Werkstücken, die verschweißt werden sollen, ein Lichtbogen erzeugt wird und der Lichtbogen relativ zu den zu schweißenden Werkstücken verschoben wird,
**dadurch gekennzeichnet,**
**dass** es darin besteht, dass die hitzebeständige Elektrode während des Schweißvorgangs kontinuierlich in Rotation um sich selbst gehalten wird, wobei der Brennerkörper axial feststehend bleibt.

2. Lichtbogenschweißbrenner mit Inertgas, der einen Brennerkörper (1) mit der Längsachse XX' und eine auf der Längsachse XX' in dem Brennerkörper (1) sitzende hitzebeständige Elektrode (3) umfasst, wobei die Elektrode (3) geeignet ist, zwischen zwei metallenen Werkstücken, die verschweißt werden sollen, ein Lichtbogen zu erzeugen,
**dadurch gekennzeichnet,**
**dass** er eine mittels Rollenlager (7) gelagerte Antriebswelle (6) für die axiale Rotationsbewegung der längs in dem Brennerkörper sitzenden Elektrode (3) aufweist, wobei die Antriebswelle (6) für die axiale Rotationsbewegung fest mit der Elektrode (3) verbunden ist, wobei der Brennerkörper axial feststehend bleibt.

3. Lichtbogenschweißbrenner nach Anspruch 2,
**dadurch gekennzeichnet,**
**dass** die Antriebswelle (6) für die axiale Rotationsbewegung der Elektrode (3) ein Ende (8) aufweist, das aus dem Brennerkörper (1) heraussieht, wobei dieses Ende (8) dazu vorgesehen ist, mit Rotationsantriebsmitteln verbunden zu werden.
